(19) Europäisches Patentamt
European Patent Office
Office européen des brevets

(11) **EP 2 989 344 B1**

(12) **EUROPÄISCHE PATENTSCHRIFT**

(45) Veröffentlichungstag und Bekanntmachung des Hinweises auf die Patenterteilung:
**19.07.2017 Patentblatt 2017/29**

(21) Anmeldenummer: **14718372.7**

(22) Anmeldetag: **15.04.2014**

(51) Int Cl.:
*F16D 65/66* *(2006.01)* *F16D 65/12* *(2006.01)*
*F16D 65/56* *(2006.01)*

(86) Internationale Anmeldenummer:
**PCT/EP2014/057574**

(87) Internationale Veröffentlichungsnummer:
**WO 2014/170301 (23.10.2014 Gazette 2014/43)**

(54) **SCHEIBENBREMSE MIT EINER BIDIREKTIONALEN VERSCHLEISSNACHSTELLVORRICHTUNG, UND BIDIREKTIONALE VERSCHLEISSNACHSTELLVORRICHTUNG**

DISC BRAKE HAVING A BIDIRECTIONAL WEAR ADJUSTMENT DEVICE AND BIDIRECTIONAL WEAR ADJUSTMENT DEVICE

FREIN À DISQUE POURVU D'UN DISPOSITIF BIDIRECTIONNEL DE RATTRAPAGE D'USURE, ET DISPOSITIF BIDIRECTIONNEL DE RATTRAPAGE D'USURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.04.2013 DE 102013006863**

(43) Veröffentlichungstag der Anmeldung:
**02.03.2016 Patentblatt 2016/09**

(73) Patentinhaber: **KNORR-BREMSE Systeme für Nutzfahrzeuge GmbH 80809 München (DE)**

(72) Erfinder:
• **BAUMGARTNER, Johann**
  **85368 Moosburg (DE)**
• **TRIMPE, Robert**
  **82234 Weßling (DE)**

(56) Entgegenhaltungen:
**DE-A1-102012 012 473    DE-A1-102012 102 577**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Scheibenbremse, insbesondere für ein Kraftfahrzeug, mit einer bidirektionalen Verschleißnachstellvorrichtung nach dem Oberbegriff des Anspruchs 1. Die Erfindung bezieht sich auf eine bidirektionale Verschleißnachstellvorrichtung.

Fahrzeuge und bestimmte technische Geräte verwenden häufig Reibungsbremsen, um kinetische Energie umzuwandeln. Bevorzugt wird dabei speziell im Personenkraftwagen- und im Nutzfahrzeugbereich die Scheibenbremse. Bei der typischen Bauform einer Scheibenbremse besteht diese aus einem Bremssattel samt innerer Mechanik, aus in der Regel zwei Bremsbelägen und der Bremsscheibe. Auf die innere Mechanik werden über einen pneumatisch betätigten Zylinder die Zylinderkräfte eingeleitet, durch einen Exzentermechanismus verstärkt und als Zuspannkraft über Gewinderohre, die auch Gewindestempel oder Gewindespindeln genannt werden, auf Bremsbeläge und Bremsscheibe übertragen, wobei über die Gewinderohre der Verschleiß von Bremsscheibe und Bremsbelägen ausgeglichen wird.

Die Zuspannkräfte wirken über beide Bremsbeläge auf die Bremsscheibe, welche in Abhängigkeit von der Höhe der Zuspannkraft eine Verzögerung der Rotationsbewegung erfährt. Ein Abstand zwischen den Bremsbelägen und der Bremsscheibe wird als Lüftspiel bezeichnet. Verzögerung wird maßgeblich vom Reibwert zwischen Bremsscheibe und Bremsbelag mitbestimmt. Da die Beläge konstruktiv als Verschleißteile ausgelegt werden und die Reibwerte abhängig von der Festigkeit sind, sind diese generell weicher als die Bremsscheibe, d.h. die Beläge erfahren über Ihre Gebrauchsdauer eine Änderung der Belagstärke, sie verschleißen. Infolge dieses Belagverschleißes und zusätzlichem Scheibenverschleiß wird dieses Lüftspiel größer. Aus dieser Belagstärkenänderung ergibt sich die Notwendigkeit, dass eine Verschleißnachstellung die Änderung ausgleicht und somit ein konstantes Luftspiel einstellt.

Ein Beispiel einer Nachstellvorrichtung beschreibt das Dokument DE 10 2004 037 771 A1. Dabei wird eine Antriebsdrehbewegung z.B. von einer Drehmoment-Begrenzungseinrichtung, beispielsweise mit einer Kugelrampe, über eine kontinuierlich wirkende Kupplung (Rutschkupplung) auf eine Verstellspindel eines Druckstempels weitergeleitet. Das Luftspiel wird dabei kontinuierlich eingestellt.

Es sind weiterhin bidirektional wirkende Bremslüftspiel-Justage Einrichtungen in unterschiedlichen Ausführungsformen bekannt, wie z.B. elektromotorisch angetriebene und elektronisch gesteuerte Nachstellvorrichtungen, welche ein Bremslüftspiel beliebig vergrößern und verkleinern können und nur in Nicht- Bremsphasen wirken. Als ein Beispiel zur Illustration sei das Dokument DE 197 31 696 genannt.

Beispiele für mechanisch angetriebene und mechanisch wirkende, kombinierte Nachstell-und Rückstellvorrichtungen, welche das Lüftspiel bei Bremsbetätigungen in Schritten vergrößern und verkleinern können beschreiben z.B. DE 10 2012 012 473 und DE 10 2012 102 577.

Andere mechanisch angetriebene und mechanisch wirkende Nachstellvorrichtungen können ein vergrößertes Lüftspiel bei Bremsbetätigungen verkleinern. Sie nutzen bei einer ungewollten Lüftspielreduzierung unter den Sollwert vorhandene Rückdreheffekte auf die Stellspindeln, um das Lüftspiel in sehr kleinen Schritten zu vergrößern. Bei Erreichen des Sollwertes wird die weitere Rückdrehbewegung durch die Sperrwirkung des Nachstellers gestoppt. Dieser Effekt ist potentiell in allen bekannten mechanisch wirkenden Nachstellsystemen enthalten, wird jedoch in der Regel durch hohe Halte-Reibmomente am Nachsteller und/oder am Spindelsystem unterdrückt, um ungewollte Lüftspielveränderungen, z.B. durch Rütteleinwirkung, zu vermeiden.

Im Gegensatz zu den oben beschriebenen bidirektionalen Nachstellerkonzepten können mit dem letzten Beispiel spontan eintretende Lüftspielverkleinerungen nur mit einer sehr großen Anzahl von Bremsbetätigungen beseitigt werden. Derartige spontan eintretende Lüftspielverkleinerungen können z.B. durch folgende Ereignisse bewirkt werden: zwischen zwei Bremsungen erfolgende starke Vibrationsbeanspruchungen, falsche Lüftspieleinstellung, Hochenergie-Bremsungen mit starkem Dickenwachstum von Bremsscheibe und Bremsbelägen etc.

Die Aufgabe der vorliegenden Erfindung besteht darin, eine verbesserte Scheibenbremse mit einer bidirektionalen Verschleißnachstellvorrichtung zu schaffen.

Eine weitere Aufgabe ist, eine verbesserte Verschleißnachstellvorrichtung bereitzustellen.

Die Aufgabe wird durch eine Scheibenbremse mit den Merkmalen des Anspruchs 1, und eine bidirektionale Verschleißnachstellvorrichtung mit den Merkmalen des Anspruchs 12 gelöst.

Eine erfindungsgemäße Scheibenbremse, vorzugsweise druckluftbetätigt, insbesondere für ein Kraftfahrzeug, umfasst eine Zuspannvorrichtung, vorzugsweise mit einem Bremsdrehhebel, mindestens eine Spindeleinheit mit mindestens einem Gewinderohr mit Außengewinde, das mit einem Innengewinde einer Brücke zusammenwirkt, und mindestens eine bidirektionale Verschleißnachstellvorrichtung, welche mit der Zuspannvorrichtung, vorzugsweise mit dem Bremsdrehhebel, gekoppelt ist. Die bidirektionale Verschleißnachstellvorrichtung umfasst eine Nachstelleinrichtung und mindestens eine Vorspanneinrichtung, wobei die Vorspanneinrichtung zur Beeinflussung einer Flankenposition einer Gewindepaarung des Außengewindes des mindestens einen Gewinderohrs und des zugehörigen Innengewindes der Brücke ausgebildet ist.

Die erfindungsgemäße Scheibenbremse mit der bidirektionalen Verschleißnachstellvorrichtung weist gegenüber dem Stand der Technik den Vorteil auf, dass die eine erhöhte Rückstellgeschwindigkeit der bidirektionalen Verschleißnachstellvorrichtung sowie eine verbesserte Beständigkeit gegenüber Verschleiß und Vibrationseinwirkung geschaffen wird.

Ein weiterer Vorteil besteht darin, dass eine bereits vorhandene Nachstelleinrichtung verwendet werden kann. Die Rückdrehbewegung der Gewinderohre wird ermöglicht und eine noch ausreichende Vibrationsbeständigkeit gewährleistet.

In einer Ausführung ist vorgesehen, dass die mindestens eine Vorspanneinrichtung für eine Einstellung einer Flankenposition des Außengewindes des mindestens einen Gewinderohrs und des zugehörigen Innengewindes der Brücke aus einer Ruheposition in einem Lösezustand der Scheibenbremse in eine Rückdrehposition mit einem reduzierten Rückdrehwiderstand der Gewindepaarung von dem Außengewinde des mindestens einen Gewinderohrs und des zugehörigen Innengewindes der Brücke bei einem Anlegevorgang der Scheibenbremse ausgebildet ist. Auf diese Weise kann eine sichere Haltewirkung der Gewindepaarung in der Ruheposition sichergestellt werden, während gleichzeitig ein Rückdrehwiderstand in der Rückdrehposition reduzierbar ist.

Unter der Ruheposition ist die Position bzw. Stellung der Scheibenbremse zu verstehen, in der/dem die Scheibenbremse nicht betätigt, also gelöst ist. In der Ruheposition sind eine Mittellinie eines Innengewindes der Brücke und eine Gewinderohrachse des diesem Innengewinde zugeordneten Gewinderohrs voneinander beabstandet. D.h., auf einer Längsseite befinden sich die Gewindeflanken der Gewindepaarung spielfrei in einem Kontaktbereich und auf der gegenüberliegenden Längsseite ist das vollständige Gewindespiel der Gewindepaarung.

Die Rückdrehposition ist die Position, welche von dem mindestens einen Gewinderohr eingenommen wird, wenn die Scheibenbremse bis zum Anlegen der Bremsbeläge an die Bremsscheibe betätigt wird, mit anderen Worten während eines Anlegevorgangs der Scheibenbremse. Dabei kommen die Mittellinie des Innengewindes der Brücke und die Gewinderohrachse des diesem Innengewinde zugeordneten Gewinderohrs zur Deckung.

In einer weiteren Ausführung ist die mindestens eine Vorspanneinrichtung zur Erzeugung einer auf das mindestens eine Gewinderohr radial wirkenden Vorspannkraft ausgebildet ist. Es hat sich in Versuchen überraschenderweise gezeigt, dass eine Querverschiebung eines drehbaren Zylinderkörpers, der mit einer Reibfläche auf einer Auflagefläche aufliegt, den Reibwiderstand der Reibfläche auf der Auflagefläche bei einer gegebenen Axialkraft reduziert.

Hierbei ist es vorteilhaft, wenn die radial wirkende Vorspannkraft eine elastisch wirkende Vorspannkraft ist. Dazu kann die mindestens eine Vorspanneinrichtung zur Erzeugung der radial wirkenden Vorspannkraft mindestens ein Kraftspeicherelement aufweisen, beispielsweise ein Druckfeder. Natürlich sind auch andere Kraftspeicherelemente möglich, z.B. pneumatische, hydraulische, elektromagnetische Kraftspeicherelemente. Dabei ist es besonders vorteilhaft, wenn diese Kraftspeicherelemente eine Steuerbarkeit aufweisen, wie z.B. steuerbare Gasdruckfedern.

In einer anderen Ausführung ist vorgesehen, dass die mindestens eine Vorspanneinrichtung mindestens einen Lüftmechanismus aufweist, welcher zur Reduzierung des Rückdrehwiderstand bzw. der Haltekräfte der Gewindepaarung von dem Außengewinde des mindestens einen Gewinderohrs und des zugehörigen Innengewindes der Brücke bei einem Anlegevorgang der Scheibenbremse in der Rückdrehposition ausgebildet ist. Damit ist eine steuerbare Einstellung von Ruheposition und Rückdrehposition möglich. Beispielsweise können zwei gegenüberliegend angeordnete Vorspanneinrichtungen verwendet werden, wobei zur Einnahme der Ruheposition die erste Vorspanneinrichtung aktiv ist. Zur Einnahme der Rückdrehposition wird die andere Vorspanneinrichtung aktiviert und hebt die Krafteinwirkung der ersten Vorspanneinrichtung soweit auf, dass eine Einnahme der Rückdrehposition sichergestellt wird.

In dieser Phase des über die Neigung der Gewindeflanken radial nach Innen Rutschens des Gewinderohrs ist auch die Reibung an den Gewindeflanken in tangentialer Richtung überwunden, wodurch das mittels der sich aufbauenden Spannkraft über die Gewindesteigung bewirkte Rückdrehmoment den Reibwiderstand überwindet und während der radialen Rutschphase des Gewinderohrs eine Rückdrehung desselben bewirkt.

In einer noch anderen Ausführung weist die Nachstelleinrichtung eine Schaltgabel verbunden mit einem Antriebselement auf, wobei die Schaltgabel zur Zusammenwirkung mit einem mit dem Betätiger der Zuspannvorrichtung, vorzugsweise mit dem Bremsdrehhebel, vorgesehen ist. Die Schaltgabel und der Betätiger bilden somit einen Anschlag für die Rückstellung des Lüftspiels auf den Sollwert des konstruktiven Lüftspiels, der mechanisch durch die Schaltgabel festlegbar ist.

Eine weitere Ausführung sieht vor, dass die Nachstelleinrichtung einen mit dem Antriebselement zusammenwirkende Freilauf- und Überlastkupplungseinrichtung aufweist. Damit ist die Funktion der Nachstelleinrichtung zur Nachstellung des Lüftspiels weiterhin gegeben.

In einer noch weiteren Ausführung ist die Nachstelleinrichtung in das mindestens eine Gewinderohr der mindestens einen Spindeleinheit eingesetzt, was einen Raumgewinn darstellt. Die Nachstelleinrichtung ist mit ihrer Abtriebsverzahnung dabei spielfrei in einem Innenzahnprofil des zugehörigen Gewinderohrs aufgenommen (Trennung Hülse/Stern [Kupplungselement]). Damit wird eine zuverlässige Übertragung der Rückdrehbewegung der Gewinderohre auf die Nachstelleinrichtung ermöglicht.

Eine andere Ausführung sieht vor, dass die Nachstelleinrichtung mit einem optimierten Kopfreibmoment ausgebildet ist, wodurch eine Rückstellung erleichtert wird. Gleichzeitig wird eine hohe Robustheit und Rüttelstabilität gewährleistet.

Eine bidirektionale Verschleißnachstellvorrichtung mit einer Nachstelleinrichtung und mindestens einer Vorspanneinrichtung ist mit der oben beschriebenen Scheibenbremse geschaffen.

Ein besonderer Vorteil besteht darin, dass bei einem angepasstem Flankenwinkel α der Gewinderohre mit einer relativ geringen radialen Verspannung ein hohes Haltemoment an den Gewinderohren in der Ruheposition erzielt wird und dieses Haltemoment bei Betätigung der Scheibenbremse 1 durch einen "Flankenrutsch-Effekt" selbsttätig weggeschaltet wird.

Ein weiterer bemerkenswerter Vorteil besteht darin, dass durch das seitliche Anpressen der Außengewinde der Gewinderohre an das jeweilige Innengewinde der Brücke die Gewinderohre auch bei starker Vibrationsbeanspruchung in der Ruheposition in einer stabilen Lage gehalten werden und so Relativbewegungen der Außengewinde der Gewinderohre gegen das Innengewinde der Brücke welche Ursache ungewollter Lüftspielveränderungen sein könnten, vermieden werden.

Die Erfindung wird nun anhand einer beispielhaften Ausführung mit Bezug auf die beigefügten Zeichnungen näher erläutert. Hierbei zeigen:

Fig. 1 eine schematische Teilschnittansicht eines Ausführungsbeispiels einer erfindungsgemäßen Scheibenbremse mit einer erfindungsgemäßen Verschleißnachstellvorrichtung;

Fig. 2 eine schematische Längsschnittansicht einer Nachstelleinrichtung der Scheibenbremse nach Fig. 1;

Fig. 3 eine schematische Draufsicht auf einen Antrieb der Nachstelleinrichtung nach Fig. 2;

Fig. 4 eine schematische Darstellung eines Versuchsaufbaus; und

Fig. 5 eine schematische Schnittansicht eines Gewindeabschnitts einer Brücke der Scheibenbremse nach Fig. 1.

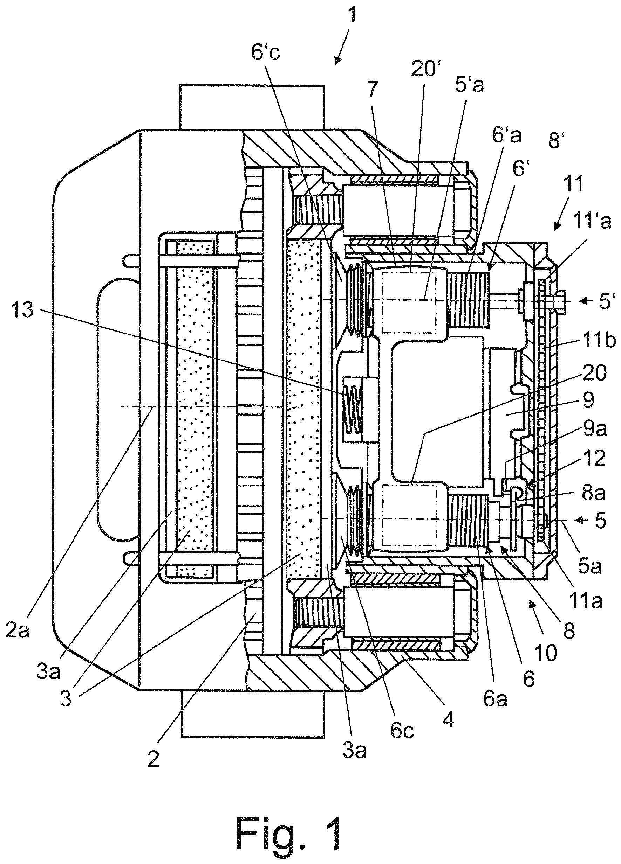

Fig. 1 zeigt eine schematische Teilschnittansicht eines Ausführungsbeispiels einer erfindungsgemäßen Scheibenbremse 1 in einer Draufsicht mit einer erfindungsgemäßen Verschleißnachstellvorrichtung 10.

Die Scheibenbremse 1 weist eine Bremsscheibe 2 mit einer Bremsscheibenachse 2a auf. Die Bremsscheibe 2 ist von einem, hier als Schwimmsattel ausgeführten, Bremssattel 4 übergriffen. Beiderseits der Bremsscheibe 2 ist jeweils ein Bremsbelag 3 mit jeweils einem Bremsbelagträger 3a angeordnet. Die Scheibenbremse 1 ist hier als zweistempelige Bremse mit zwei Spindeleinheiten 5 und 5' mit jeweils einem Gewinderohr 6, 6' ausgebildet. Die Gewinderohre 6, 6' können auch als Gewindestempel oder Gewindespindeln bezeichnet werden. Die in Fig. 1 rechts befindliche Seite der Scheibenbremse 1 wird als Zuspannseite und die links befindliche Seite wird als Belagschachtseite bezeichnet.

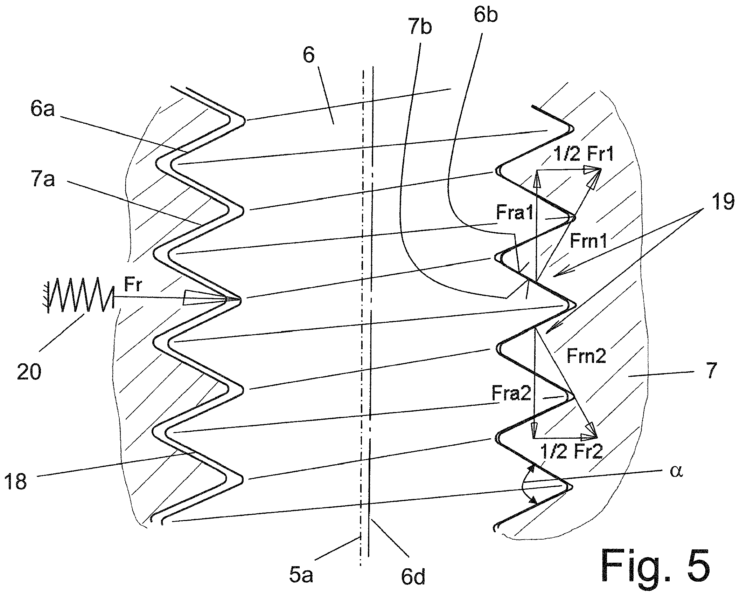

Der zuspannseitige Bremsbelagträger 3a steht mit den Spindeleinheiten 5, 5' an Enden der Gewinderohre 6, 6' über Druckstücke 6c, 6'c in Verbindung. Der andere Bremsbelag 3 mit seinem Bremsbelagträger 3a wird auch reaktionsseitiger Bremsbelag 3 genannt und ist mit seinem Bremsbelagträger 3a auf der anderen Seite der Bremsscheibe 2 im Bremssattel 4 festgelegt. Die Gewinderohre 6, 6' weisen jeweils ein Außengewinde 6a, 6'a auf und sind jeweils in einer Brücke 7 in zugehörigen Innengewinden 7a (siehe Fig. 5) verdrehbar angeordnet. Die Brücke 7 wird auch als Traverse bezeichnet.

Die Brücke 7 und somit die Gewinderohre 6, 6' sind von einer Zuspannvorrichtung, hier ein Bremsdrehhebel 9 mit einer Schwenkachse rechtwinklig zu der Bremsscheibenachse 2a, betätigbar. Der Bremsdrehhebel 9 weist einen nicht näher bezeichneten Hebelkörper auf, welcher mit der Brücke 7 in Zusammenwirkung steht.

Die Brücke 7 ist in Richtung der Bremsscheibenachse 2a durch den Bremsdrehhebel 9 verstellbar. Eine Bewegung auf die Bremsscheibe 2 wird als Zuspannbewegung bezeichnet, und eine Bewegung in Gegenrichtung wird Lösebewegung genannt. Eine Rückstellfeder 13 ist in der Mitte der Brücke 7 in einer entsprechenden Ausnehmung auf der belagseitigen Seite der Brücke 7 aufgenommen und stützt sich am Bremssattel 4 ab. Mittels der Rückstellfeder 13 wird die Brücke 7 bei der Lösebewegung in die in Fig. 1 gezeigte gelöste Stellung der Scheibenbremse 1 zurück verstellt.

Ein Abstand zwischen den Bremsbelägen 3 und der Bremsscheibe 2 in der gelösten Stellung wird als Lüftspiel bezeichnet. Infolge von Belag- und Scheibenverschleiß wird dieses Lüftspiel größer. Wenn dies nicht kompensiert wird, kann die Scheibenbremse 1 ihre Spitzenleistung nicht erreichen, da ein Betätigungshub der Betätigungsmechanik, d.h. hier der Betätigungshub bzw. ein Schwenkwinkel des Bremsdrehhebels 9, nicht mehr ausreicht.

Die Scheibenbremse 1 kann unterschiedliche Kraftantriebe aufweisen. Der Bremsdrehhebel 9 wird hier z.B. pneumatisch betätigt. Zu Aufbau und Funktion einer pneumatischen Scheibenbremse 1 wird auf die entsprechende Beschreibung der DE 197 29 024 C1 verwiesen.

Die Verschleißnachstellvorrichtung 10 ist zur bidirektionalen Einstellung eines vorher festgelegten Lüftspiels, das als Nominallüftspiel bezeichnet wird, ausgebildet. Eine bidirektionale Einstellung bedeutet hier, dass die Verschleißnachstellvorrichtung 10 sowohl eine Nachstellung als auch eine Rückstellung des Lüftspiels vornehmen kann.

Unter dem Begriff "Nachstellung" ist eine Lüftspielverkleinerung zu verstehen. Das vorher festgelegte Lüftspiel ist durch die Geometrie der Scheibenbremse 1 bestimmt und weist ein so genanntes konstruktives Lüftspiel auf. Mit anderen Worten, die Verschleißnachstellvorrichtung 10 verkleinert ein vorhandenes Lüftspiel, wenn dieses in Bezug auf das vorher festgelegte Lüftspiel zu groß ist, auf den Sollwert des vorher festgelegten Lüftspiels.

Mit dem Begriff "Rückstellung" ist eine Lüftspielvergrößerung gemeint. Dabei wird ein Lüftspiel, dessen aktueller Wert kleiner als der Sollwert des vorher festgelegten Lüftspiels ist, wieder vergrößert. Dies wird unten noch ausführlich beschrieben.

Die Verschleißnachstellvorrichtung 10 umfasst hier eine Nachstelleinrichtung 8, einen Mitnehmer 8' und mindestens eine Vorspanneinrichtung 20, 20'. In einer Ausführung mit nur einer Spindeleinheit 5, was hier nicht dargestellt aber leicht vorstellbar ist, umfasst die Verschleißnachstellvorrichtung 10 die Nachstelleinrichtung 8 und mindestens eine Vorspanneinrichtung 20, 20'.

Die Nachstelleinrichtung 8 ist an der einen Spindeleinheit 5 koaxial zu dieser, zu deren Gewinderohr 6 und einer Nachstellerachse 5a angeordnet. In diesem Ausführungsbeispiel ist die Nachstelleinrichtung 8 in den Gewinderohren 6 einsetzbar. Die Nachstelleinrichtung 8 ist in nicht näher erläuterter Weise im Bremssattel 4 abgestützt bzw. eingesetzt. Eine ausführliche Beschreibung dazu ist dem Dokument DE 10 2004 037 771 A1 zu entnehmen, auf das hier Bezug genommen wird.

Der Mitnehmer 8' ist koaxial zu der anderen Spindeleinheit 5', zu deren Gewinderohr 6' und einer Mitnehmerachse 5'a angeordnet. Der Mitnehmer 8' ist hier in das Gewinderohr 6' eingesetzt und steht mit diesem in Wirkverbindung.

Die Nachstellerachse 5a, die Mitnehmerachse 5'a und die Bremsscheibenachse 2a sind parallel zueinander angeordnet.

Die Nachstelleinrichtung 8 der Verschleißnachstellvorrichtung 10 steht über einen Antrieb 12 mit dem Bremsdrehhebel 9 in Zusammenwirkung. Der Antrieb 12 umfasst einen Betätiger 9a, welcher mit dem Bremsdrehhebel 9 verbunden ist, und ein Antriebselement 8a der Nachstelleinrichtung 8.

Die mindestens eine Vorspanneinrichtung 20, 20' ist zur Zusammenwirkung mit mindestens einer der beiden Gewinderohre 6, 6' vorgesehen und dient zur Erzeugung einer Vorspannkraft, welche auf mindestens eines der beiden Gewinderohre 6, 6' einwirkt. Dies wird weiter unten noch im Detail erläutert.

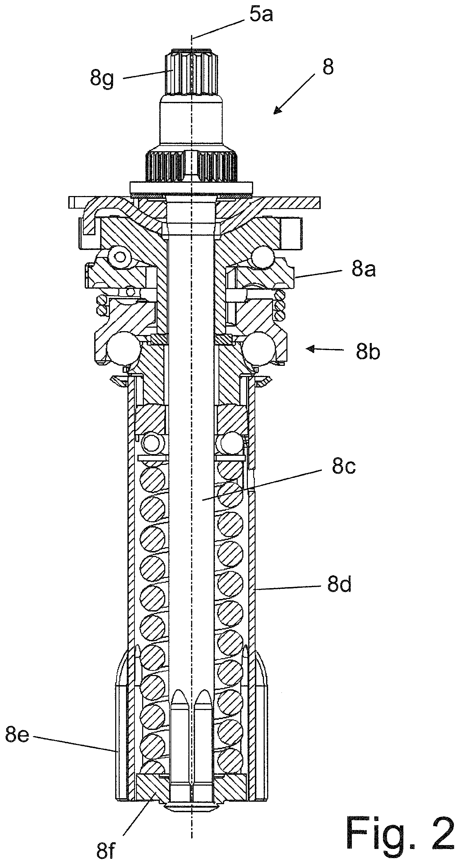

Die Nachstelleinrichtung 8 und der Mitnehmer 8' sind durch eine Synchronisationseinheit 11 derart gekoppelt, dass eine Verdrehbewegung des Gewinderohrs 6 um die Nachtstellerachse 5a eine Verdrehbewegung des Gewinderohrs 6' um die Mitnehmerachse 5'a bewirkt und umgekehrt. Die Synchronisationseinheit 11 ist hier an einer zuspannseitigen Oberseite des Bremssattels 4 angeordnet und von einem Deckel abgedeckt. Die Synchronisationseinheit 11 umfasst hier ein Synchronrad 11 a, das mit dem Gewinderohr 6 der einen Spindeleinheit 5 und mit dem Nachsteller 8 gekoppelt ist, ein weiteres Synchronrad 11'a, das mit dem Gewinderohr 6' der anderen Spindeleinheit 5' und dem Mitnehmer 8' gekoppelt ist, und ein Synchronmittel 11 b, mit welchem die Synchronräder 11 a und 11'a gekoppelt sind. In diesem Ausführungsbeispiel sind die Synchronräder 11a, 11'a Kettenräder und das Synchronmittel 11 b eine Kette. Damit ist eine synchrone Bewegung der Gewinderohre 6, 6' der Spindeleinheiten 5 und 5' bei Nachstell- und Rückstellvorgängen (Antrieb durch die Nachstelleinrichtung 8) und Einstellungen bei Wartungsarbeiten, z.B. Bremsbelagwechsel, (manueller Antrieb z.B. über ein Betätigungsende des Mitnehmers 8' oder/und einen Antriebsabschnitt 8g der Nachstelleinrichtung 8 (siehe Fig. 2) gewährleistet.

In Fig. 2 ist eine schematische Längsschnittansicht der Nachstelleinrichtung 8 der Scheibenbremse 1 nach Fig. 1 dargestellt.

Die Nachstelleinrichtung 8 weist eine zentrale Nachstellerwelle 8c mit dem Antriebsabschnitt 8g an einem oberen, zuspannseitigen Ende auf. Der Antriebsabschnitt 8g ist hier mit einem nicht näher bezeichneten Werkzeugansatz versehen. Darunter befindet sich ein Ansatz mit einer Kerbverzahnung zur Kopplung mit dem hier nicht gezeigten Synchronrad 11a (siehe Fig. 1). Unterhalb dieser Kerbverzahnung ist ein Kragen der Nachstellerwelle 8c angeordnet, welcher auf einer Kugelscheibe ruht, die in einer darunter angeordneten Lagerscheibe gelagert ist. Die Lagerscheibe liegt auf einer Bundbuchse auf, mit welcher die Lagerscheibe in nicht näher angegebener Weise verdrehsicher verbunden ist. Diese Bauteile sind um die Nachstellerwelle 8c herum angeordnet und nicht näher bezeichnet. Deren Funktion kann dem Dokument DE 10 2004 037 771 A1 entnommen werden.

Weiterhin sind die folgenden Bauteile nacheinander um die Nachstellerwelle 8c herum auf dieser angeordnet: Das Antriebselement 8a, eine Freilauf- und Überlastkupplungseinrichtung 8b und eine Hülse 8d. Die Nachstellerwelle 8c erstreckt sich bis zu dem in Fig. 2 unten dargestellten Ende der Hülse 8d durch die Hülse 8d und eine in dieser angeordnete Druckfeder hindurch. Die Druckfeder liegt an einem unteren Ende der Nachstellerwelle 8c befestigten Kopplungselement 8f auf. Das Kopplungselement 8f ist mit einem unteren Abschnitt der Innenseite der Hülse 8d drehfest gekoppelt. Der untere Außenabschnitt der Hülse 8d ist mit ab ihrem Umfang angeordneten Nachstellerabtriebselementen 8e in einer Art Zahnform versehen.

Der Bremsdrehhebel 9 ist mit dem Antriebselement 8a, welches auch als Schaltgabel bezeichnet wird, über den Betätiger 9a (auch Hebelpin genannt) gekoppelt. Der Betätiger 9a und das Antriebselement 8a bilden den Antrieb 12 (siehe Fig. 1) der Nachstelleinrichtung 8 und somit der Verschleißnachstellvorrichtung 10.

Eine Antriebsbewegung der Nachstelleinrichtung 11 durch den Betätiger 9a auf das Antriebselement 8a wird bei einer Verschleißnachstellung durch nicht näher bezeichnete Bauteile und Funktionsgruppen der Freilauf- und Überlastkupplungseinrichtung 8b auf die Hülse 8d mit den Nachstellerabtriebselementen 8e übertragen. Zur weiteren Beschreibung der Bauteile und Funktionsgruppen der Freilauf- und Überlastkupplungseinrichtung 8b wird auf das Dokument DE 10 2004 037 771 A1 verwiesen.

Die Nachstelleinrichtung 8 ist in das Gewinderohr 6 eingesetzt und mit dem Gewinderohr 6 mittels der Nachstellerabtriebselemente 8e, die mit korrespondierenden Aufnahmen eines Innenzahnprofils innerhalb des Gewinderohrs 6 drehfest und spielfrei gekoppelt sind, zusammenwirkt.

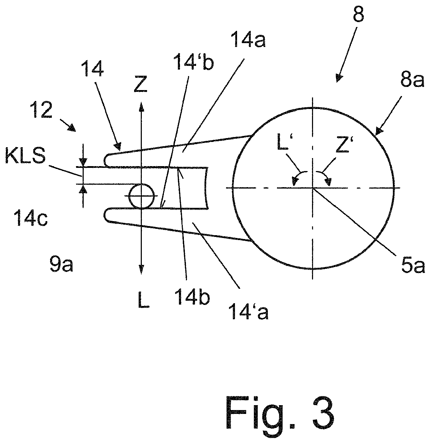

In Fig. 3 ist eine schematische Draufsicht auf den Antrieb 12 der Nachstelleinrichtung 8 nach Fig. 2 gezeigt.

Das Antriebselement 8a ist als eine Schaltgabel 14 ausgebildet. Die Schaltgabel 14 umfasst einen Antriebsfinger 14a und einen Ruhefinger 14'a als Gabelarme, welche sich radial von der Nachstellerachse 5a nach außen erstrecken und von einander beabstandet sind. Innenflanken 14b und 14'b, nämlich die Innenflanke 14b des Antriebsfingers 14a und die Innenflanke 14'b des Ruhefingers 14'a bilden eine Gabelöffnung 14c der Schaltgabel 14. Die Innenflanken 14b und 14'b sind hier parallel zueinander angeordnet.

Innerhalb der Gabelöffnung 1c ist der Betätiger 9a des Bremsdrehhebels 9 angeordnet. Der Betätiger 9a und die Schaltgabel 14 bilden den Antrieb 12 der Nachstelleinrichtung 8. Der Betätiger 9a ist z.B. ein Stift (oder Nocken, oder Zahn, oder dgl.) mit einem kreisförmigen Querschnitt. Ein Durchmesser des Betätigers 9a ist hier kleiner als eine Weite der Gabelöffnung 14c. Dies ist nur schematisch dargestellt. In Fig. 3 ist eine Ruhestellung bzw. unbetätigte Stellung der Scheibenbremse 1 gezeigt, d.h. die Scheibenbremse 1 ist gelöst. Hierbei kontaktiert der Betätiger 9a mit einer Seite die Innenflanke 14'b des Ruhefingers 14'a.

Bei Verschwenkung des Bremsdrehhebels 9 bewegt sich der mit dem Bremsdrehhebel 9 fest verbundene Betätiger 9a auf einem Kreisumfangsabschnitt, der auf die Zeichnungsfläche projiziert eine Gerade ergibt, die hier mit zwei Pfeilen angedeutet ist. Beim Zuspannen der Scheibenbremse 1 bewegt sich der Betätiger 9a in Richtung Z. Dabei löst sich der der Betätiger 9a von der Innenflanke 14'b des Ruhefingers 14'a und durchläuft zunächst einen Weg, der einem Spiel KLS entspricht, bevor er die gegenüberliegende Innenflanke 14b des Antriebsfingers 14a der Schaltgabel 14 kontaktiert. Dieses Spiel KLS wird auch als konstruktives Lüftspiel bezeichnet. Bei weiterem Zuspannen, d.h. weiterer Verschwenkung des Bremsdrehhebels 9 verschwenkt der Betätiger 9a die Schaltgabel 14 und somit das Antriebselement 8a in einer Schwenkbewegung in Richtung Z' (hier im Uhrzeigersinn) um die Nachstellerachse 5a zur Verschleißnachstellung.

Beim Lösen der Scheibenbremse 1 verschwenkt der Bremsdrehhebel 9 mit dem Betätiger 9a in entgegengesetzter Richtung, welche hier mit dem Buchstaben L angegeben ist. Dabei kommt der Betätiger 9a wieder in Kontakt mit der Innenflanke 14'b des Ruhefingers 14'a und führt die Schaltgabel 14 und somit das Antriebselement 8a wieder in die in Fig. 3 gezeigte Ruhestellung in einer Verschwenkbewegung in Richtung L' zurück. Die Verschwenkbewegung L' des Antriebselementes 8a verläuft entgegengesetzt zur Verschwenkbewegung Z'.

Die Schaltgabel 14 des Antriebselementes 8a der Nachstelleinrichtung 8 weist in dem Ausführungsbei-spiel der erfindungsgemäßen Verschleißnachstellvor-richtung 10 weitere Funktionen auf, die nachstehend mit einer Erläuterung der Wirkungsweise der erfindungsgemäßen Verschleißnachstellvorrichtung 10 beschrieben werden.

Bei Beginn einer Bremsbetätigung, d.h. beim Zuspannen der Scheibenbremse 1, erfahren die Gewinderohre 6, 6' im Anlegevorgang der Druckstücke 6c, 6'c (Fig. 1) an den Bremsbelagträger 3a mit den Bremsbelägen 3 Querbewegungen gegenüber dem Innenge-winde 7, 7a, das auch als Mutterngewinde bezeichnet werden kann, der Brücke 7. Dadurch ist eine Gewindereibung zwischen den Außengewinden 6a, 6'a der Gewinderohre 6, 6' und den Innengewinden 7, 7a in tan-gentialer Richtung vorübergehend aufgehoben. Dies wird auch unten noch ausführlich im Zusammenhang mit Fig. 5 erläutert.

Während des nun beginnenden Spannkraftaufbaus ermöglicht diese vorübergehend fehlende Gewindereibung infolge der wirkenden Axialkraft eine geringe Rückdrehung der Gewinderohre 6, 6'. Der Betrag einer solchen Rückstellbewegung liegt dabei in der Größen-ordnung von etwa < 10 $\mu$m.

Diese so erzeugte Rückdrehbewegung wird nun von den Gewinderohren 6, 6' auf die Nachstelleinrichtung 8 mittels der Nachstellerabtriebselemente 8e und den Mitnehmer, der ebenfalls mit ähnlichen Abtriebselementen versehen ist, übertragen.

Im Falle eines verkleinerten Lüftspiels hat in diesem Anlegezustand der Druckstücke 6c, 6'c der Betätiger 9a (siehe Fig. 3) die Innenflanke 14b des Antriebsfingers 14a der Schaltgabel 14 des Antriebselementes 8a der Nachstelleinrichtung 8 noch nicht erreicht. Durch die Rückdrehbewegung in Richtung L' der gesamten Nachstelleinrichtung 8 wird nun die Schaltgabel 14 des Antriebselementes 8a um einen entsprechenden kleinen Winkelschritt auf den Betätiger 9a zu verschwenkt (in Richtung L').

Dieser Vorgang wiederholt sich bei nachfolgenden Bremsbetätigungen solange, bis die Schaltgabel 14 mit der Innenflanke 14b des Antriebsfingers 14a schon bei Beginn der Rückdrehbewegung in Richtung L' am Betätiger 9a zur Anlage kommt.

Der Bremsdrehhebel 9 blockt nun über den Betätiger 9a und die Sperrwirkung der Freilauf- und Überlastkupplungseinrichtung 8b der Nachstelleinrichtung 8 die weitere Rückdrehbewegung.

Auf diese Weise wird bei einem zu kleinen Lüftspiel mit dieser "Rückstellung" eine Lüftspielvergrößerung auf den Sollwert des Lüftspiels erreicht.

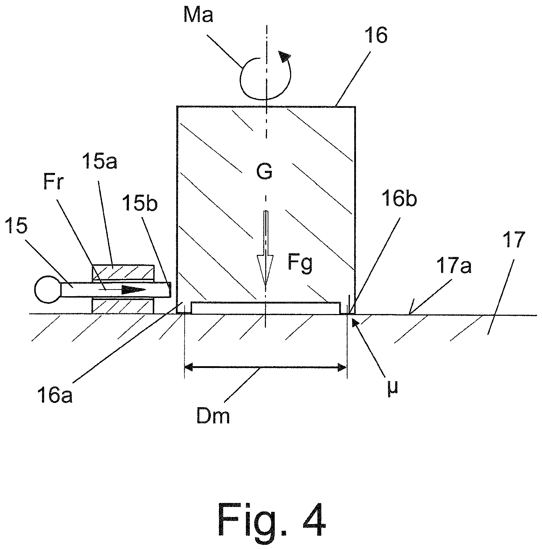

Die oben erwähnte Aufhebung der Gewindereibung wird im Folgenden im Detail beschrieben. Dazu zeigt Fig. 4 eine schematische Darstellung eines Versuchsaufbaus.

Anhand des Versuchsaufbaus nach Fig. 4 lässt sich der Vorgang des Reibungsverlustes bei einer erzwungenen Querbewegung erläutern.

Ein Zylinderkörper 16 steht mit seinem Gewicht G mit einer Ringfläche 16a eines axial von der Unterseite des Zylinderkörpers 16 nach unten hervorstehenden Ringabschnitts 16 auf einer glatten, ebenen Auflage 17. Die Ringfläche 16a weist einen mittleren Durchmesser Dm auf. In einer Aufstandsfläche zwischen der Ringfläche 16a und der Auflagefläche 17a herrscht der Reibbeiwert μ. Um die Hochachse des Zylinderkörpers 16 wirkt ein Drehmoment Ma. Eine Gewichtskraft Fg bewirkt mittels der Reibung an der Aufstandsfläche ein Haltemoment Mh, das sich wie folgt ergibt:

$$Mh = Fg * \mu * Dm/2$$

Der Körper dreht sich wenn die Bedingung Ma > Mh erfüllt ist, d.h. ein Drehantrieb des Zylinderkörpers 16 mit dem Drehmoment Ma muss größer sein als das Haltemoment Mh.

Neben dem Zylinderkörper 16 ist ein Stößel 15 verschiebbar in einer Lagerung 15a auf der Auflage 17 angeordnet. Der Stößel 15 weist einen zum Zylinderkörper 16 weisendes Ende mit einem Kontaktabschnitt 15b auf.

Nun wird mittels des Stößels 15 eine lineare Querverschiebung des Zylinderkörpers 16 erzwungen. Die Querverschiebung erfolgt rechtwinklig zur Hochachse des Zylinderkörpers 16. Dabei kommt der Stößel 15 über seinen Kontaktabschnitt 15a mit der Außenfläche des Zylinderkörpers 16 dicht oberhalb des Bereiches des Ringabschnitts 16a mittels einer in Längsrichtung des Stößels 15 wirkenden Vorspannkraft Fr in Kontakt. Überraschenderweise stellt man während der Phase dieser Querverschiebung eine Drehbewegung des Zylinderkörpers 16 um seine Hochachse fest, auch wenn die Bedingung Ma > Mh nicht erfüllt ist, nämlich wenn Ma < Mh ist.

Durch die erzwungene Verschiebung des Zylinderkörpers 16 in Richtung rechtwinklig zu seiner Hochachse ist die Reibung in der Aufstandsfläche zwischen der Ringfläche 16a und der Auflagefläche 17a für jede weitere Bewegungsrichtung überwunden.

Bekannte Auswirkungen dieses Effektes sind z.B.: Schraubenlösen und Verlust der Seitenführung bei blockierendem Fahrzeugrad.

Die beschriebene Ringfläche des Körpers kann man als einen Gewindegang einer Schraubverbindung betrachten. Die wirkende Axialkraft (Fg) ist die Spannkraft der Schraube. Die Spannkraft ruft aufgrund der Gewindesteigung an den Gewindeflanken eine Hangabtriebskraft und damit wiederum ein in Löserichtung wirkendes Drehmoment hervor. Erzwungene Querbewegungen von Bolzen- und/oder Muttergewinde können nun ein Lösen der Schraubverbindung bewirken, da, wie oben beschrieben, durch die erzwungene Querbewegung die Reibung an den Gewindeflanken auch in tangentialer Richtung überwunden wird.

Dieser Effekt wird nun bei der erfindungsgemäßen Verschleißnachstellvorrichtung 10 genutzt, um an den Gewinderohren 6, 6' der Verschleißnachstellvorrichtung 10 der Scheibenbremse 1 eine Rückstellung für eine Lüftspielvergrößerung zu bewirken.

In Fig. 5 ist eine schematische Schnittansicht eines Gewindeabschnitts der Brücke 7 der Scheibenbremse 1 nach Fig. 1 dargestellt.

Es ist der Bereich der Brücke 7 mit dem Gewinderohr 6 der Spindeleinheit 5 gezeigt. Für der anderen Bereich der Brücke 7 mit dem Gewinderohr 6' der Spindeleinheit 5' gilt die folgende Beschreibung natürlich auch, was leicht zu verstehen ist.

Das Gewinderohr 6 weist eine Gewinderohrlängsachse 6d auf. Die Brücke 7 weist das Innengewinde 7a (Mutterngewinde) für das Außengewinde 6a des Gewinderohrs 6 auf, welches mit seinem Außengewinde 6a in das zugehörige Innengewinde 7a eingeschraubt ist.

Relativbewegungen des Außengewindes 6a des Gewinderohrs 6 zu dem Innengewinde 7a der Brücke 7 ergeben sich bei der Bremsenbetätigung z.B. aus dem Bewegungsablauf der Brücke 7, aus Verschiebungen der Bremsbeläge 3 bei Anlegen der Druckstücks 6c (Fig. 1) etc., sowie bei nicht zentrisch liegendem Außengewinde 6a infolge der Zentrierbewegung des Außengewindes 6a des Gewinderohrs 6 im Innengewinde 7a der Brücke 7 beim Kraftaufbau (bei Flachgewinden nicht gegeben). Diese Relativbewegungen sind jedoch eher zufällig und ggf. von der Einbaulage der Scheibenbremse 1 und anderen Randbedingungen abhängig.

Als besonderer Vorteil der erfindungsgemäßen Scheibenbremse 1 mit der erfindungsgemäßen Verschleißnachstellvorrichtung 10 hat sich herausgestellt, die notwendige Querbewegung im Wesentlichen rechtwinklig zur Gewinderohrlängsachse 6d bei Betätigung der Scheibenbremse 1 gezielt und selbsttätig über eine elastische seitliche Verspannung des Außengewindes 6a des Gewinderohrs 6 zum Innengewinde 7a in der Brücke 7 zu bewirken. Mit dieser Maßnahme konnten die gegenläufigen Forderungen nach geringem Rückdrehwiderstand in der Anlegephase und hohem Haltemoment zur Rüttelsicherung bei freier Fahrt erfüllt werden.

Zur Beeinflussung der Flankenposition des Außengewindes 6a des Gewinderohrs 6 (dementsprechend natürlich auch Außengewinde 6'a des Gewinderohrs 6') zur gezielten Reibungsaufhebung zwischen dem Außengewinde 6a des Gewinderohrs 6 und dem Innengewinde 7a der Brücke 7 weist die Verschleißnachstellvorrichtung 10 mindestens eine Vorspanneinrichtung 20 auf.

Die Vorspanneinrichtung 20 erzeugt die Vorspannkraft Fr in einer radialen Richtung auf das Gewinderohr 6 im Wesentlichen rechtwinklig zu der Gewinderohrlängsachse 6d des Gewinderohrs 6. Die Vorspanneinrichtung 20 kann z.B. ein Kraftspeicherelement aufweisen, das als Druckfeder ausgebildet ist. Natürlich sind auch andere Ausgestaltungen möglich. Die Vorspanneinrichtung 20 wirkt z.B. mittels einer als Innengewindeabschnitt ausgebildeten Gleit- oder/und Kugellagerung mit dem gegenüberliegenden Außengewindeabschnitt des Gewinderohrs 6 zusammen.

Auf diese Weise wird durch die seitlich auf das Gewinderohr 6 wirkende elastische Radialkraft der Vorspanneinrichtung 20 das Gewinderohr 6 einseitig in das Innengewinde 7a der Brücke 7 gedrückt, womit sich das gesamte Gewindespiel 18 auf der dazu gegenüberliegenden Seite ausbildet. In dieser Position befindet sich das Gewinderohr 6 in einer Ruheposition. Bei Bremsbeginn erfolgt zunächst nur in dem am Innengewinde 7a anliegenden Bereich des Außengewindes 6a des Gewinderohrs 6 eine Spannkraftübertragung.

Dabei ist die Gewinderohrlängsachse 6d zu der Nachstellerachse 5a, welche gleichzeitig die Mittellinie des Innengewindes 7a bildet, in einem Abstand parallel verschoben. In dem in Fig. 5 gezeigten Fall ist dabei das Gewindespiel 18 der Gewindepaarung von Außengewinde 6a des Gewinderohrs 6 und dem Innengewinde 7a der Brücke 7 auf der Seite angeordnet, auf welcher sich die Vorspanneinrichtung 20 befindet.

Auf der gegenüberliegenden Seite (in Fig. 5 ist dies die rechte Seite) werden Kontaktzonen 19 zwischen Außengewindeflächen 6b des Außengewindes 6a des Gewinderohrs 6 und Innengewindeflächen 7b des Innengewindes 7a der Brücke 7 gebildet.

Da die Gewindeflanken 6a, 7a im Schnittprofil keilförmig verlaufen, kann die durch die elastische Verspannung erzeugte Anpresskraft an den Gewindeflanken 6a, 7a und damit die erzeugte Reibkraft über einen Flankenwinkel α zusätzlich beeinflusst werden. Mit dem Flankenwinkel α eines metrischen Gewindes von 60° können schon zufriedenstellende Ergebnisse erzielt werden. Vorteilhaft können jedoch niedrigere Flankenwinkel α zur Anwendung gebracht werden, da damit bei gleicher radialer Verspannung höhere Halte-Reibmomente erzielt werden. Allerdings ist durch den angestrebten und nachfolgend beschriebenen Effekt des selbsttätigen Lösens der Verspannung für den anwendbaren Flankenwinkel α auch eine Untergrenze gegeben.

Wird nun die auf das Gewinderohr 6 in axialer Richtung wirkende Spannkraft durch den Bremsdrehhebel 9 (Fig. 1) aufgebracht, wirkt diese Kraft nur einseitig, nämlich im Kontaktbereich 19, auf die Gewindeflanken 6a, 7a, und es entsteht aufgrund des Flankenwinkels α in den Gewindeflanken 6a, 7a des Kontaktbereiches 19 eine radial nach Innen gerichtete Hangabtriebskraft (in Fig. 5 sind hierzu in den Kontaktbereichen 19 Normalkräfte Frn1, Frn2 an den Gewindeflanken 6a, 7a als Kräftedreiecke mit Aufteilung der Hangabtriebskräfte in Komponenten von Radialkräften Fr1, Fr2 und Axialkräften Fra1, Fra2 angedeutet), die ein Gleiten der Gewindeflanken 6a, 7a und damit eine Verschiebung des Gewinderohrs 6 zur Mittelachse des Innengewindes der Brücke 7 (hier zur Nachstellerachse 5a) zur Folge hat, so dass die Gewinderohrlängsachse 6d mit der Nachstellerachse 5a fluchtet. Das Gewinderohr 6 rutscht dabei durch diesen zentrierend wirkenden Effekt gegen die radial wirkende elastische Vorspannkraft Fr in seine Mittellage und bringt damit auch die Gewindeflanken 6a, 7a der gegenüberliegenden Seite zur Anlage. Damit befindet sich das Gewinderohr 6 in einer Rückdrehposition.

Zum Beispiel sollte bei einem angenommenen Reibbeiwert von μ = 0,15 im Kontaktbereich 19 der Gewindeflanken 6a, 7a der Flankenwinkel α mindestens 30° betragen, um noch ein sicheres Gleiten zu erreichen. Bei dem Flankenwinkel von α = 60° des metrischen Gewindes ergibt sich bereits ein erheblicher Überschuss der Hangabtriebskraft über die Reibkraft.

In dieser Phase des über die Neigung der Gewindeflanken 6a, 7a radial nach Innen Rutschens des Gewinderohrs 6 ist auch die Reibung an den Gewindeflanken 6a, 7a in tangentialer Richtung überwunden, wodurch das mittels der sich aufbauenden Spannkraft Fr über die Gewindesteigung bewirkte Rückdrehmoment den Reibwiderstand überwindet und während der radialen Rutschphase des Gewinderohrs 6 eine Rückdrehung desselben bewirkt.

Der besondere Vorteil dieser Lösung besteht darin, dass bei angepasstem Flankenwinkel α der Gewinderohre 6, 6' mit einer relativ geringen radialen Verspannung ein hohes Haltemoment an den Gewinderohren 6, 6' im nicht betätigten Zustand der Scheibenbremse 1 erzielt wird und dieses Haltemoment bei Betätigung der Scheibenbremse 1 durch den "Flankenrutsch-Effekt" selbsttätig weggeschaltet wird.

Damit kann das an der Nachstelleinrichtung 8 vorgesehene Kopfreibmoment reduziert werden, wodurch eine zufriedenstellende Rückdrehwirkung der Gewinderohre 6, 6' bei gleichzeitig hoher Robustheit und Rüttelstabilität der Verschleißnachstellvorrichtung 10 erzielt wird.

Ein weiterer bemerkenswerter Vorteil besteht darin, dass durch das seitliche Anpressen der Außengewinde 6a, 6'a der Gewinderohre 6, 6' an das jeweilige Innengewinde 7a, 7'a der Brücke 7 die Gewinderohre 6, 6' im nicht betätigten Zustand der Scheibenbremse 1 auch bei starker Vibrationsbeanspruchung in einer stabilen Ruheposition gehalten werden und so Relativbewegungen der Außengewinde 6a, 6'a der Gewinderohre 6, 6' gegen das Innengewinde 7a, 7'a der Brücke 7, welche Ursache ungewollter Lüftspielveränderungen sein können, vermieden werden.

Zur Erfüllung der widerstrebenden Forderungen nach Ermöglichung der Rückdrehbewegung einerseits und ausreichender Vibrationsbeständigkeit andererseits sind die oben beschriebenen, folgenden Maßnahmen, alternativ oder in Kombination, vorgesehen:

- Beeinflussung der Flankenposition von Außengewinde 6a, 6'a und Innengewinde 7a, 7'a im nichtbelasteten Zustand durch die radial wirkende, elastische Vorspannkraft Fr der Vorspanneinrichtung 20, 20' zur Erzielung einer sicheren Ruheposition der Gewinderohre 6, 6' in der Brücke 7 bei Vibrationsbeanspruchung.

- Zur Erzeugung der radialen Vorspannkraft Fr der Vorspanneinrichtung 20, 20' ggf. Anwendung eines auf die Gewinderohre 6, 6' wirkenden Federelementes welches bei Querbewegungen der Gewinderohre 6, 6' ein in rückdrehender Richtung wirkendes Reibmoment auf die Gewinderohrer 6, 6' zur zusätzlichen Erhöhung der Rückdrehkraft aufbringt.

- Ein Lüftmechanismus, der unter Nutzung der beschriebenen Maßnahmen im Anlegevorgang der Scheibenbremse 1 die Haltekräfte an den Gewinderohr(en) 6, 6' zum Abbau von Rückdrehwiderständen reduziert.

Der Lüftmechanismus kann z.B. so aufgebaut sein, dass das Gewinderohr 6, 6' von beiden Seiten mit einer Vorspannkraft Fr beaufschlagbar ist, wobei diese Vorspannkräfte Fr einerseits zur Einstellung der sicheren Ruheposition der Flankenposition der Gewindepaarung von Außengewinde 6a, 6'a und Innengewinde 7a, 7'a bei gelöster Scheibenbremse 1 und andererseits zur Einstellung der Rückdrehposition während des Anlegevorgangs der Bremsbeläge 3 so ausgebildet sind, dass die Haltekräfte an den Gewinderohr(en) 6, 6' reduziert werden.

Die Verschleißnachstellvorrichtung 10 ist in erster Linie für die Verschleißnachstellung für pneumatisch zugespannte Scheibenbremsen 1 im Nutzfahrzeugbereich gestaltet. Sie kann jedoch auch bei allen anderen Anwendungen, wo Verschleißausgleich notwendig ist, zum Einsatz kommen.

Die oben beschriebenen Ausführungsbeispiele schränken die Erfindung nicht ein. Sie ist im Rahmen der beigefügten Ansprüche modifizierbar.

So kann z.B. die Vorspanneinrichtung 20, 20' pneumatisch, hydraulisch oder/und elektrisch betätigbar sein.

Es ist denkbar, dass Gewinderohrlängsachse 6d zu der Nachstellerachse 5a auch in einem Winkel ungleich Null Grad verschwenkbar ist.

**Bezugszeichenliste**

| 1 | Scheibenbremse |
| 2 | Bremsscheibe |
| 2a | Bremsscheibenachse |
| 3 | Bremsbelag |
| 3a | Bremsbelagträger |
| 4 | Bremssattel |
| 5, 5' | Spindeleinheit |
| 5a | Nachstellerachse |
| 5'a | Mitnehmerachse |
| 6, 6' | Gewinderohr |
| 6a, 6'a | Außengewinde |
| 6b | Außengewindefläche |
| 6c, 6'c | Druckstück |
| 6d | Gewinderohrlängsachse |
| 7 | Brücke |
| 7a | Innengewinde |
| 7b | Innengewindefläche |
| 8 | Nachstelleinrichtung |
| 8' | Mitnehmer |
| 8a | Antriebselement |
| 8b | Freilauf- und Überlastkupplungseinrichtung |
| 8c | Nachstellerwelle |
| 8d | Hülse |
| 8e | Nachstellerabtriebselement |
| 8f | Kopplungselement |
| 8g | Antriebsabschnitt |
| 9 | Bremsdrehhebel |
| 9a | Betätiger |
| 10 | Verschleißnachstellvorrichtung |
| 11 | Synchronisationseinheit |
| 11 a, 11'a | Synchronrad |
| 11 b | Synchronmittel |
| 12 | Antrieb |
| 13 | Rückstellfeder |
| 14 | Schaltgabel |
| 14a | Antriebsfinger |
| 14'a | Ruhefinger |
| 14b, 14'b | Innenflanke |
| 14c | Gabelöffnung |
| 15 | Stößel |
| 15a | Lagerung |
| 15b | Kontaktabschnitt |
| 16 | Zylinderkörper |
| 16a | Ringabschnitt |
| 16b | Ringfläche |
| 17 | Auflage |
| 17a | Auflagefläche |
| 18 | Gewindespiel |
| 19 | Kontaktzone |
| 20, 20' | Vorspanneinrichtung |
| $\alpha$ | Flankenwinkel |
| Dm | Reibdurchmesser |
| G | Gewicht |
| Fg | Gewichtskraft |
| Fr | Vorspannkraft |
| Fr1, Fr2 | Radialkraft |
| Fra1, Fra2 | Hangabtriebskraft |
| Frn 1, Frn2 | Normalkraft |
| KLS | Spiel |
| L, L' | Löserichtung |
| Ma | Antriebsdrehmoment |
| $\mu$ | Reibbeiwert |
| Z, Z' | Zuspannrichtung |

**Patentansprüche**

1. Scheibenbremse (1), vorzugsweise druckluftbetätigt, insbesondere für ein Kraftfahrzeug, mit einer Zuspannvorrichtung, vorzugsweise mit einem Bremsdrehhebel (9), mindestens einer Spindeleinheit (5, 5') mit mindestens einem Gewinderohr (6, 6') mit Außengewinde (6a, 6'a), das mit einem Innengewinde (7a, 7'a) einer Brücke (7) zusammenwirkt, und mindestens einer bidirektionalen Verschleißnachstellvorrichtung (10), welche mit der Zuspannvorrichtung, vorzugsweise mit dem Bremsdrehhebel (9), gekoppelt ist,
**dadurch gekennzeichnet,**
**dass** die bidirektionale Verschleißnachstellvorrichtung (10) eine Nachstelleinrichtung (8) und mindestens eine Vorspanneinrichtung (20, 20') umfasst, wobei die Vorspanneinrichtung (20, 20') zur Beeinflussung einer Flankenposition einer Gewindepaarung des Außengewindes (6a, 6'a) des mindestens einen Gewinderohrs (6, 6') und des zugehörigen Innengewindes (7a, 7'a) der Brücke (7) ausgebildet ist.

2. Scheibenbremse (1) nach Anspruch 1 **dadurch gekennzeichnet, dass** die mindestens eine Vorspanneinrichtung (20, 20') für eine Einstellung einer Flankenposition des Außengewindes (6a, 6'a) des mindestens einen Gewinderohrs (6, 6') und des zugehörigen Innengewindes (7a, 7'a) der Brücke (7) aus einer Ruheposition in einem Lösezustand der Scheibenbremse (1) in eine Rückdrehposition mit einem reduzierten Rückdrehwiderstand der Gewindepaarung von dem Außengewinde (6a, 6'a) des mindestens einen Gewinderohrs (6, 6') und des zugehörigen Innengewindes (7a, 7'a) der Brücke (7) bei einem Anlegevorgang der Scheibenbremse (1) ausgebildet ist.

3. Scheibenbremse (1) nach Anspruch 2, **dadurch gekennzeichnet, dass** die mindestens eine Vorspanneinrichtung (20, 20') zur Erzeugung einer auf das mindestens eine Gewinderohr (6, 6') radial wirkenden Vorspannkraft (Fr) ausgebildet ist.

4. Scheibenbremse (1) nach Anspruch 3, **dadurch gekennzeichnet, dass** die radial wirkenden Vorspannkraft (Fr) eine elastisch wirkende Vorspannkraft (Fr) ist.

5. Scheibenbremse (1) nach Anspruch 3 oder 4, **dadurch gekennzeichnet, dass** die mindestens eine Vorspanneinrichtung (20, 20') zur Erzeugung der radial wirkenden Vorspannkraft (Fr) mindestens ein Kraftspeicherelement aufweist.

6. Scheibenbremse (1) nach Anspruch 5, **dadurch gekennzeichnet, dass** das mindestens eine Kraftspeicherelement eine Druckfeder ist.

7. Scheibenbremse (1) nach einem der Ansprüche 2 bis 6, **dadurch gekennzeichnet, dass** die mindestens eine Vorspanneinrichtung (20, 20') mindestens einen Lüftmechanismus aufweist, welcher zur Reduzierung des Rückdrehwiderstand bzw. der Haltekräfte der Gewindepaarung von dem Außengewinde (6a, 6'a) des mindestens einen Gewinderohrs (6, 6') und des zugehörigen Innengewindes (7a, 7'a) der Brücke (7) bei einem Anlegevorgang der Scheibenbremse (1) in der Rückdrehposition ausgebildet ist.

8. Scheibenbremse (1) nach einem der vorhergehenden Ansprüche, **dadurch gekennzeichnet, dass** die Nachstelleinrichtung (8) eine Schaltgabel (14) verbunden mit einem Antriebselement (8a) aufweist, wobei die Schaltgabel (14) zur Zusammenwirkung mit einem mit einem Betätiger (9a) der Zuspannvorrichtung, vorzugsweise mit dem Bremsdrehhebel (9), vorgesehen ist.

9. Scheibenbremse (1) nach Anspruch 8, **dadurch gekennzeichnet, dass** die Nachstelleinrichtung (8) eine mit dem Antriebselement (8a) zusammenwirkende Freilauf- und Überlastkupplungseinrichtung (8b) aufweist.

10. Scheibenbremse (1) nach einem der vorhergehenden Ansprüche, **dadurch gekennzeichnet, dass** die Nachstelleinrichtung (8) in das mindestens eine Gewinderohr (6, 6') der mindestens einen Spindeleinheit (5, 5') eingesetzt ist.

11. Scheibenbremse (1) nach einem der vorhergehenden Ansprüche, **dadurch gekennzeichnet, dass** die Nachstelleinrichtung (8) ein optimiertes Kopfreibmoment aufweist.

12. Bidirektionale Verschleißnachstellvorrichtung (10) mit einer Nachstelleinrichtung (8) und mindestens einer Vorspanneinrichtung (20, 20') einer Scheibenbremse (1) nach einem der vorhergehenden Ansprüche.

**Claims**

1. Disc brake (1), preferably pneumatic, in particular for a motor vehicle, comprising a brake application device, preferably with a pivoted brake lever (9), at least one spindle unit (5, 5') having at least one threaded tube (6, 6') with an external thread (6a, 6'a) cooperating with an internal thread (7a, 7'a) of a bridge (7), and at least one bidirectional wear adjustment device (10), which is coupled to the brake application device, preferably to the pivoted brake lever (9),
**characterized**
**in that** the bidirectional wear adjustment device (10) comprises an adjusting arrangement (8) and at least one preloading arrangement (20, 20'), wherein the preloading arrangement (20, 20') is designed to influence a flank position of a thread pairing of the external thread (6a, 6'a) of the at least one threaded tube (6, 6') and the associated internal thread (7a, 7'a) of the bridge (7).

2. Disc brake (1) according to Claim 1, **characterized in that** the at least one preloading arrangement (20, 20') is designed to adjust a flank position of the external thread (6a, 6'a) of the at least one threaded tube (6, 6') and of the associated internal thread (7a, 7'a) of the bridge (7) from a rest position in a state of release of the disc brake (1) into a reverse rotation position with a reduced reverse rotation resistance of the thread pairing of the external thread (6a, 6'a) of the at least one threaded tube (6, 6') and of the associated internal thread (7a, 7'a) of the bridge (7) during an application process of the disc brake (1).

3. Disc brake (1) according to Claim 2, **characterized in that** the at least one preloading arrangement (20, 20') is designed to produce a preloading force (Fr), which acts radially on the at least one threaded tube (6, 6').

4. Disc brake (1) according to Claim 3, **characterized in that** the radially acting preloading force (Fr) is an elastically acting preloading force (Fr).

5. Disc brake (1) according to Claim 3 or 4, **characterized in that** the at least one preloading arrangement (20, 20') has at least one energy storage element for producing the radially acting preloading force (Fr).

6. Disc brake (1) according to Claim 5, **characterized in that** the at least one energy storage device is a compression spring.

7. Disc brake (1) according to one of Claims 2 to 6, **characterized in that** the at least one preloading arrangement (20, 20') has at least one release mechanism, which is designed to reduce the reverse rotation resistance or holding forces of the thread pairing of the external thread (6a, 6'a) of the at least one threaded tube (6, 6') and of the associated internal thread (7a, 7'a) of the bridge (7) during an application process of the disc brake (1) in the reverse rotation position.

8. Disc brake (1) according to one of the preceding claims, **characterized in that** the adjusting arrangement (8) has a selector fork (14) connected to a driving element (8a), wherein the selector fork (14) is provided for interaction with an with the actuator (9a) of the brake application device, preferably with an pivoted brake lever (9).

9. Disc brake (1) according to Claim 8, **characterized in that** the adjusting arrangement (8) has a freewheeling and overload clutch arrangement (8b), which interacts with the driving element (8a).

10. Disc brake (1) according to one of the preceding claims, **characterized in that** the adjusting arrangement (8) is inserted into the at least one threaded tube (6, 6') of the at least one spindle unit (5, 5').

11. Disc brake (1) according to one of the preceding claims, **characterized in that** the adjusting arrangement (8) has an optimized head friction torque.

12. Bidirectional wear adjustment device (10) comprising an adjusting arrangement (8) and at least one preloading arrangement (20, 20') of a disc brake (1) according to one of the preceding claims.

**Revendications**

1. Frein (1) à disque, de préférence actionné par de l'air comprimé, notamment pour un véhicule automobile, comprenant un dispositif de serrage, ayant de préférence un levier (9) tournant de frein, au moins une unité (5, 5') de broche ayant au moins un tube (6, 6') fileté à filetage (6a, 6'a) extérieur, qui coopère avec un taraudage (7a, 7'a) d'un pontet (7) et au moins un dispositif (10) de rattrapage d'usure bidirectionnel, qui est couplé au dispositif de serrage, de préférence au levier (9) tournant de frein, **caractérisé en ce que** le dispositif (10) de rattrapage d'usure bidirectionnel comprend un dispositif (8) de rattrapage et au moins un dispositif (20, 20') de précontrainte, le dispositif (20, 20') de précontrainte étant constitué pour influer sur une position de flanc d'une paire du filetage (6a, 6'a) du au moins un tube (6, 6') fileté et du taraudage (7a, 7'a) associé du pontet (7).

2. Frein (1) à disque suivant la revendication 1, **caractérisé en ce que** le au moins un dispositif (20, 20') de précontrainte est constitué, pour un réglage d'une position de flanc du filetage (6a, 6'a) extérieur du au moins un tube (6, 6') fileté et du taraudage (7a, 7'a) associé du pontet (7), d'une position de repos dans un état de desserrage du frein (1) à disque à une position de rotation en retour ayant une résistance de rotation en retour réduite de la paire du filetage (6a, 6'a) extérieur du au moins un tube (6, 6') fileté et du taraudage (7a, 7'a) associé du pontet (7), lors d'une opération d'application du frein (1) à disque.

3. Frein (1) à disque suivant la revendication 2, **caractérisé en ce que** le au moins un dispositif (20, 20') de précontrainte est constitué pour produire une force (Fr) de précontrainte agissant radialement sur le au moins un tube (6, 6') fileté.

4. Frein (1) à disque suivant la revendication 3, **caractérisé en ce que** la force (Fr) de précontrainte agissant radialement est une force (Fr) de précontrainte à effet élastique.

5. Frein (1) à disque suivant la revendication 3 ou 4, **caractérisé en ce que** le au moins un dispositif (20, 20') de précontrainte a au moins un élément d'accumulation de force pour la production de la force (Fr) de précontrainte agissant radialement.

6. Frein (1) à disque suivant la revendication 5, **caractérisé en ce que** le au moins un élément d'accumulation de force est un ressort de compression.

7. Frein (1) à disque suivant l'une des revendications 2 à 6, **caractérisé en ce que** le au moins un dispositif (20, 20') de précontrainte a au moins un mécanisme de desserrage, qui est constitué pour réduire la résistance de rotation en retour ou les forces de maintien de la paire du filetage (6a, 6'a) extérieur du au moins un tube (6, 6') fileté et du taraudage (7a, 7'a) associé du pontet (7), lors d'une opération d'application du frein (1) à disque en la position de rotation en retour.

8. Frein (1) à disque suivant l'une des revendications précédentes, **caractérisé en ce que** le dispositif (8) de rattrapage a une fourche (14) de manoeuvre, reliée à un élément (8a) d'entraînement, la fourche (14) de manoeuvre étant prévue pour coopérer avec un actionneur (9a) du dispositif de serrage, de préférence avec le levier (9) de tournant de frein.

9. Frein (1) à disque suivant la revendication 8, **caractérisé en ce que** le dispositif (8) de rattrapage a un dispositif (8b) de roue libre et d'accouplement en cas de surcharge, coopérant avec l'élément (8a) d'entraînement.

10. Frein (1) à disque suivant l'une des revendications précédentes, **caractérisé en ce que** le dispositif (8) de rattrapage est inséré dans le au moins un tube (6, 6') fileté de la au moins une unité (5, 5') de broche.

11. Frein (1) à disque suivant l'une des revendications précédentes, **caractérisé en ce que** le dispositif (8) de rattrapage a un couple de frottement de tête optimisé.

12. Dispositif (10) de rattrapage d'usure bidirectionnel ayant un dispositif (8) de rattrapage et au moins un dispositif (20, 20') de précontrainte d'un frein (1) à disque suivant l'une des revendications précédentes.

# Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004037771 A1
- DE 19731696
- DE 102012012473
- DE 102012102577
- DE 19729024 C1